# EUROPEAN PATENT APPLICATION

(11) **EP 1 229 707 A2**
(43) Date of publication of application: **07.08.2002**
(21) Application number: 01310392.4
(22) Date of filing: 12.12.2001
(51) Int. Cl.: H04M 3/20, H04M 3/42

(54) **Communication system**

(30) Priority: 13.12.2000 GB 0030367
(71) Applicant: Matsushita Communication Industrial UK Ltd., Thatcham, Berks RG19 4ZD (GB)
(72) Inventor: Cooper, David E., c/o Matsushita Com. Ind. UK Ltd., Thatcham, Berkshire RG19 4ZD (GB)
(74) Representative: Dawson, Elizabeth Ann

(57) **Abstract**

A control apparatus for, and a method performed by, a user station in a communications system in which user stations of the system can receive messages during a call. The control apparatus of a user station is arranged to construct a message comprising an instruction. The user station is arranged to transmit the message. The control apparatus in a further user station is arranged to receive the message, and implement the instruction, which relates to a call the further user station is participating in. The call may be terminated or put on hold. Application to mobile telephones operating in a GSM cellular radio communications system is described.

## Description

The present invention relates to a method of operating a communications system and apparatus therefor, and in particular relates to allowing a third party to override a telephone call between two or more other parties. The present invention is applicable to, but not limited to, mobile telephones for use in cellular radio communications systems such as the Global System for Mobile Communications (GSM).

In a cellular communications system, the area over which service is provided is divided into a number of smaller areas called cells. Typically each cell is served from a base transceiver station (BTS) which has an antenna or antennae for radio transmission to and reception from a plurality of user stations, each of which has an antenna for radio transmission to and reception from the BTS. The user stations are normally mobile stations such as mobile telephones, which are sometimes referred to as cellular telephones or cell phones.

GSM shares radio resources between different user stations by employing a time division multiple access (TDMA) arrangement. Signalling and traffic data is respectively assigned to specific timeslots of the TDMA arrangement on the basis of logical channels defined in the GSM specification. A conventional call is formed by a switched link, including assigned logical channels, between two user stations of a cellular communications system or between a user station of a cellular communications system and a user station from another communications system via a public switch telephone network (PSTN). During a call the user station is unable to accept further calls from further user stations.

In certain other communications systems, calls or other switched links put in place between two parties can be interrupted or overridden by a third party. This facility can be used to enable a new call to override an existing call when the new call is related to an emergency, or where the third party is of a higher rank than one or both of the parties already involved in a call, or where the third party is a person who pays for the calls made by one of the other two parties, e.g. in the case of a parent who pays for the telephone calls of a dependent child.

For example, such call override procedures are possible in communications systems in which the original call is conducted on one frequency, and a call override instruction is transmitted and received on a different frequency. This arrangement is not, however, supported by GSM and the like.

A separate feature of GSM is that it provides a means of sending messages and other data of limited size to and from user stations by means of a facility called the Point-to-Point Short Message Service (SMS), as defined in part 03.40 of the GSM specification. The SMS facility enables text messages to be sent to or from a user station. The SMS facility can also be used to send other data, such as subscriber credits, to a user station. A feature of the SMS facility is that, for compliance with the GSM specification, the user stations must be able to receive and transmit data forming SMS messages whilst engaged in a call. This is achieved by inserting the SMS data in TDMA timeslots other than those used to contain the traffic data transmitted and received as part of the call.

The present invention employs free-format messages (e.g. the SMS facility in the case of GSM), which can be received in parallel with an ongoing call, to enable a call being conducted between two parties to be overridden by a third party.

In a first aspect, the present invention provides a control apparatus for a telephone, e.g. a mobile telephone, for use in a telecommunications system, for example a cellular communication system such as GSM that enables the telephone, during a telephone call with a second telephone, to additionally receive a message such as an SMS-message during the telephone call from a third telephone, the control apparatus comprising: means for constructing a message including an instruction for transmission by the telephone such that the instruction can be received by another telephone conducting a call such that the telephone conducting the call can receive the message and act on the instruction to affect the call.

In a second aspect, the present invention provides a control apparatus for a telephone, e.g. a mobile telephone, for use in a telecommunications system, for example a cellular communication system such as GSM that enables the telephone, during a telephone call with a second telephone, to additionally receive a message such as an SMS-message during the telephone call from a third telephone, the control apparatus comprising: means for receiving, whilst conducting a telephone call, one of said messages where the message comprises an instruction for the telephone to implement in relation to the telephone call, and means for implementing the instruction within the telephone.

The present invention also provides a telephone, e.g. a mobile telephone, or other equivalent apparatus, comprising control apparatus in accordance with the first or second aspect.

Embodiments of the present invention will now be described, by way of example only, with reference to the accompanying drawings, in which:
Figure 1 is a schematic illustration of part of a cellular radio communications system;
Figure 2 is an external view of a mobile telephone;
Figure 3 is a block diagram schematically illustrating functional units of the mobile telephone illustrated in Figure 2;
Figure 4 is a schematic illustration of functional modules of software and data stored in a controller which is one of the functional units illustrated in Figure 3;
Figure 5 is a schematic illustration of functional modules of a receive processing module which is one of the functional modules illustrated in Figure 4;
Figure 6 is a schematic illustration of a call override and control module which is one of the functional modules illustrated in Figure 4;
Figure 7 is a schematic illustration of functional modules of a transmit processing module which is one of the functional modules illustrated in Figure 4;
Figure 8 shows process steps carried out by different entities of the cellular communications system illustrated in Figures 1, 2 and 3, when one mobile telephone overrides a call of another mobile telephone;
Figure 9 shows process steps carried out by a mobile telephone when preparing and transmitting a call override instruction in one of the process steps of Figure 8;
Figure 10 shows process steps carried out by the cellular communications system illustrated in Figure 1 when receiving an SMS-message and transmitting a corresponding SMS-message in one of the process steps of Figure 8;
Figure 11 shows process steps carried out by a mobile telephone when receiving a call override instruction and transmitting an authentication request in one of the process steps of Figure 8;
Figure 12 shows process steps carried out by a mobile telephone when receiving an authentication request and transmitting an authentication response in one of the process steps of Figure 8; and
Figure 13 shows process steps carried out by a mobile telephone when receiving an authentication response and implementing a call override instruction in one of the process steps of Figure 8.

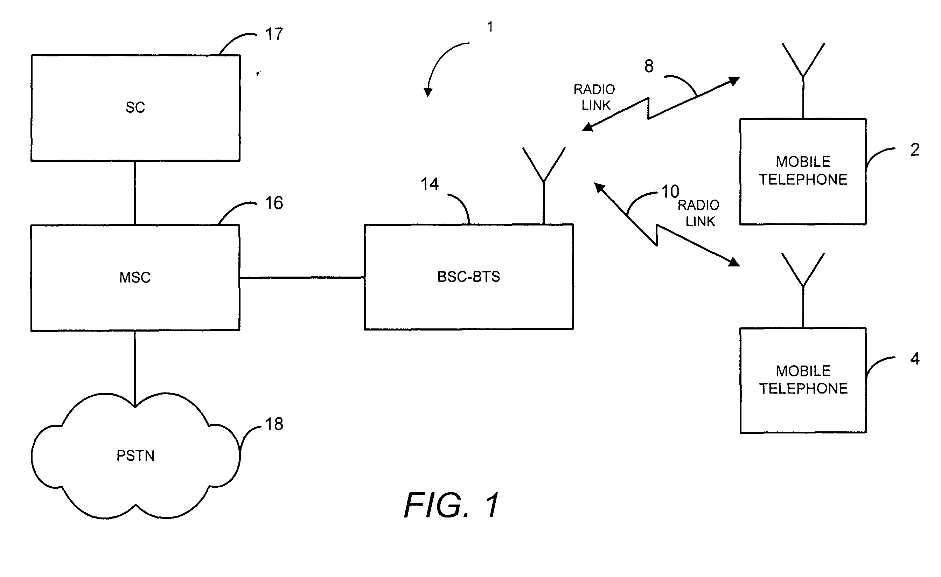

Figure 1 is a schematic illustration of part of a cellular radio communications system 1. By way of example two mobile telephones 2 and 4, of the same type as each other, are shown. The mobile telephones 2 and 4 employ respective radio links 8 and 10 established between them and a combined base station controller-base transceiver station (BSC-BTS) 14. The BSC-BTS 14 is coupled to a mobile services switching centre (MSC) 16 which in turn is coupled to a public switched telephone network (PSTN) 18 and an SMS service centre (SC) 17. The MSC 16, the BSC-BTS 14, the SC 17 and the mobile telephones 2 and 4 operate according to the GSM specification. The SC 17 receives an incoming SMS message sent from one mobile telephone, constructs a corresponding outgoing message and forwards it to a recipient mobile telephone, as specified in section 03.40 of the GSM specification.

The geographical area served by the BSC-BTS 14 constitutes one cell of the cellular communications system, i.e. each of the mobile telephones 2 and 4 are in this cell. Although not shown, the system contains other cells served by other BSC-BTSs.

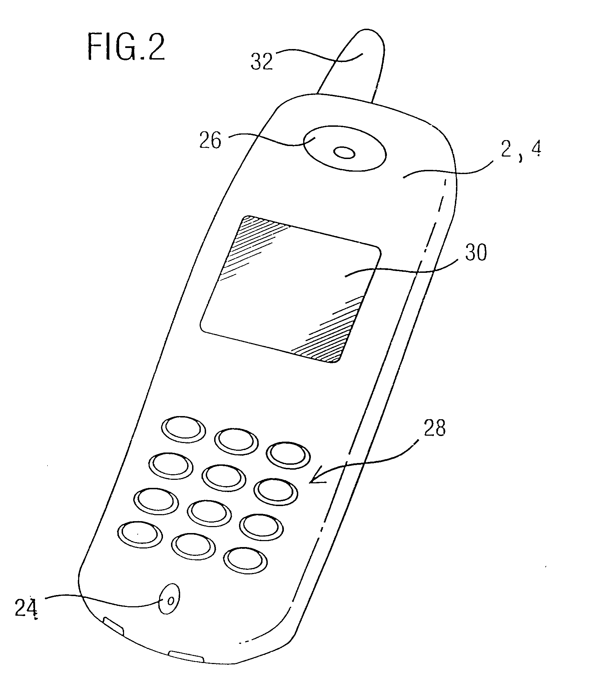

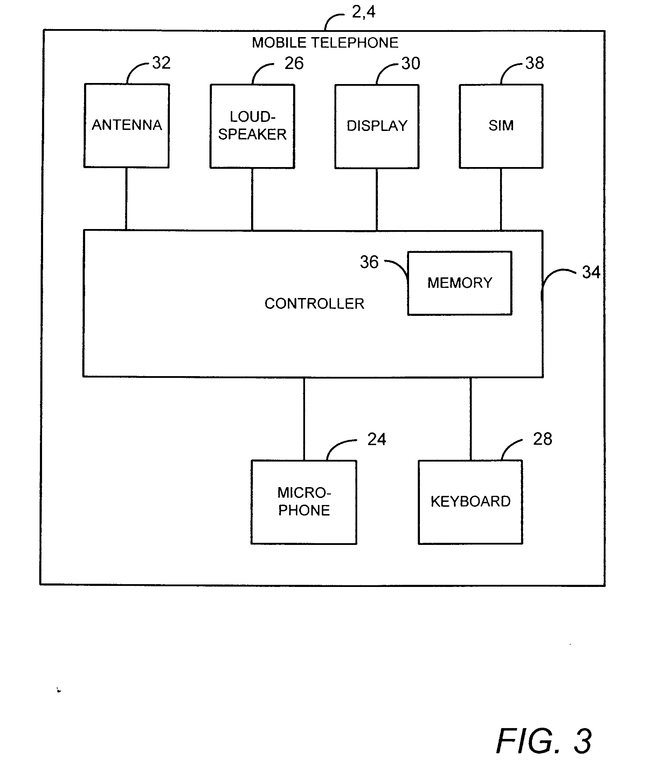

Further details of the mobile telephones will now be described with reference to Figure 2, which is an external view, and Figure 3 which shows a block diagram schematically illustrating functional units.

The mobile telephones 2 and 4 each comprise: a microphone 24 and a loudspeaker 26 enabling a user to input speech and hear audio output respectively; a user interface in the form of a keyboard 28 enabling the user to input numbers to be called, other information and instructions for controlling various features of the mobile telephone 2, including instructions for overriding a third party call as will be described in detail below; a display 30 on which incoming or outgoing telephone numbers, SMS text messages and other information can be displayed; and an antenna 32 for transmitting and receiving radio communications over the respective radio link 8 or 10.

As shown in Figure 3, the mobile telephones 2 and 4 each further comprise a controller 34, which contains a memory 36. The controller is coupled to each of the items described above with reference to Figure 2. The mobile telephone 2,4 further comprises a subscriber identification module (SIM) 38. The SIM 38 is a detachable module which provides user-specific data and also algorithms and data specific to the operator of the cellular communications system. The controller 34 controls the overall operation of the mobile telephone 2,4 in compliance with the GSM specification in conventional manner, and further controls the operation of call override functions of the present embodiment.

It is conventional in the field of GSM-compliant mobile telephones to describe technical characteristics in terms of functional modules of software and data (hereinafter referred to as controller modules) stored in the memory 36 of the controller 34 and processed by the controller 34. Many of these controller modules correspond directly to functions required by the GSM specification which are termed applications.

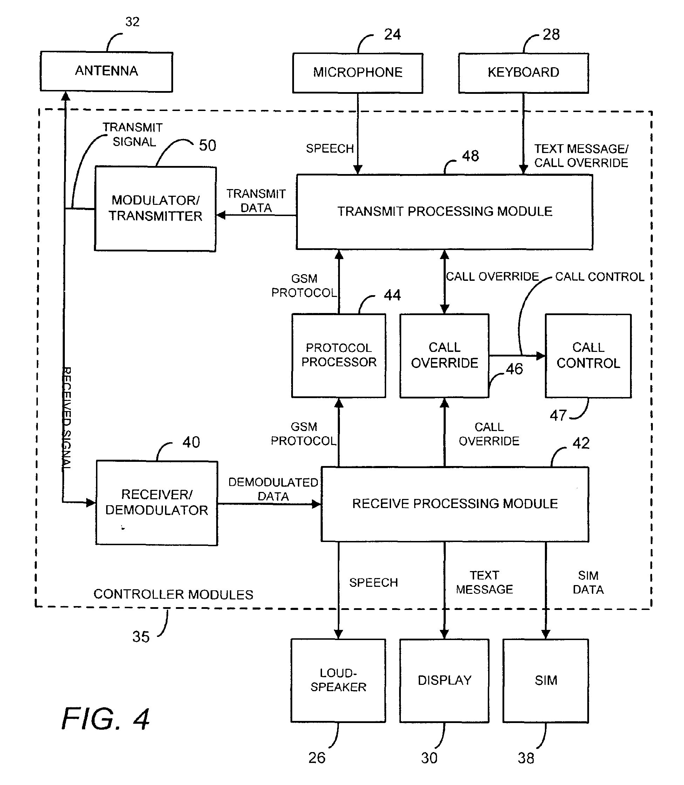

Figure 4 is a block diagram schematically illustrating relevant controller modules 35 of the controller 34 of the present embodiment. The controller modules 35 include the following: a modulator and transmitter module 50, a transmit processing module 48, a receiver and demodulator module 40, a receive processing module 42, a GSM protocol processing module 44, a call override module 46, and a call control module 47.

In the present embodiment, the call override module 46 enables each of the mobile telephones 2 and 4 to both transmit call override instructions and to receive and respond to call override instructions. Therefore both the transmit and receive functions of the above listed modules as present in each mobile telephone 2 and 4 will be described, with reference to Figures 4, 5, 6 and 7.

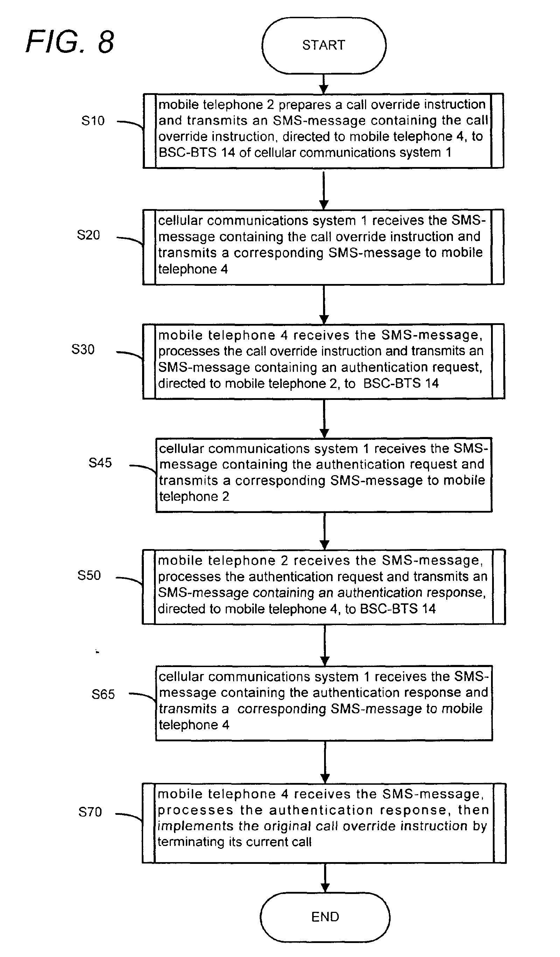

Thereafter, an exemplary implementation of a call override procedure, in which the transmission parts of the mobile telephone 2 are used to transmit a call override instruction, and in which the reception parts of the mobile telephone 4 are used to receive the call override instruction, will be described with reference to Figures 8 to 13.

When the mobile telephone 2,4 transmits data, the GSM protocol processing module 44, in conventional fashion, formulates GSM protocol data for the data to be transmitted, and forwards this GSM protocol data to the transmit processing module 48. Such data is continually sent from the mobile telephone 2,4 to the BSC-BTS 14 whenever the mobile telephone 2,4 is switched on, even if no traffic data is being sent.

Furthermore, if traffic data is to be sent, such data is also processed by the transmit processing module 48 as follows. When speech data is being transmitted as part of a call, the speech data is forwarded to the transmit processing module from the microphone 24. Another capability is that a text message can be transmitted using the SMS facility. In this case, the text message is forwarded to the transmit processing module 48 from the keyboard 28.

In the present embodiment, another capability is that the SMS facility can be employed to send a call override instruction to another mobile telephone engaged in a call. The call override instruction is input by the user of the mobile telephone 2 via the keyboard 28, and the call override instruction is forwarded to the transmit processing module 48. The transmit processing module 48 forwards the call override instruction to the call override and control module 46, which then returns it to the transmit processing module 48, as will be explained in more detail below.

The transmit processing module 48 processes the different types of data thereby producing overall transmission data for forwarding to the modulator and transmitter module 50. The modulator and transmitter module 50 modulates the data onto a radio carrier to provide a transmit signal which is transmitted via the antenna 32 to the BSC-BTS 14.

When the mobile telephone 2,4 receives data, the antenna 32 of the mobile telephone 2,4 receives radio signals transmitted by the BSC-BTS 14, and the received signal is passed to the receiver and demodulator 40. The receiver and demodulator 40 demodulates the transmitted data from the radio carrier frequency and forwards the demodulated data to the receive and processing module 42.

As is detailed in the GSM specification, the data received by the mobile telephone 2,4 from the BSC-BTS 14 contains different types of data arranged on a TDMA basis. The data includes GSM protocol data, which is repeatedly transmitted by the BSC-BTS 14 for control purposes. In addition, if the mobile telephone 2 is in the process of a call, then it will receive speech data (or other traffic data). Another possibility is that SMS data is being transmitted to the mobile telephone 2,4. Also, since SMS messages can be received during a call, it is possible that both speech data and SMS data is contained in the demodulated data. The SMS data may comprise a conventional text message, conventional SIM data i.e. data to be processed by the SIM 38, or in the present embodiment a call override instruction. The receive processing module 42 processes the demodulated data by extracting each of these different types of data and forwarding each type to an appropriate destination. In particular, GSM protocol data is forwarded to the GSM protocol processing module 44, the speech data is forwarded to the loudspeaker 26, text messages are forwarded to the display 30, SIM data is forwarded to the SIM 38, and call override instructions are forwarded to the call override and control module 46.

The GSM protocol processing module 44 employs the GSM protocol data in conventional fashion to interpret and respond to control data being transmitted by the BSC-BTS.

The call override module 46 responds to the call override instruction by verifying authenticity of the instruction, and thereafter issuing a call control instruction to the call control module 47. The call control module 47 is a standard GSM module, and responds by closing down a current call as will be explained in more detail below.

The transmit processing module 48, the call override module 46 and the receive processing module 42 will now be described in more detail.

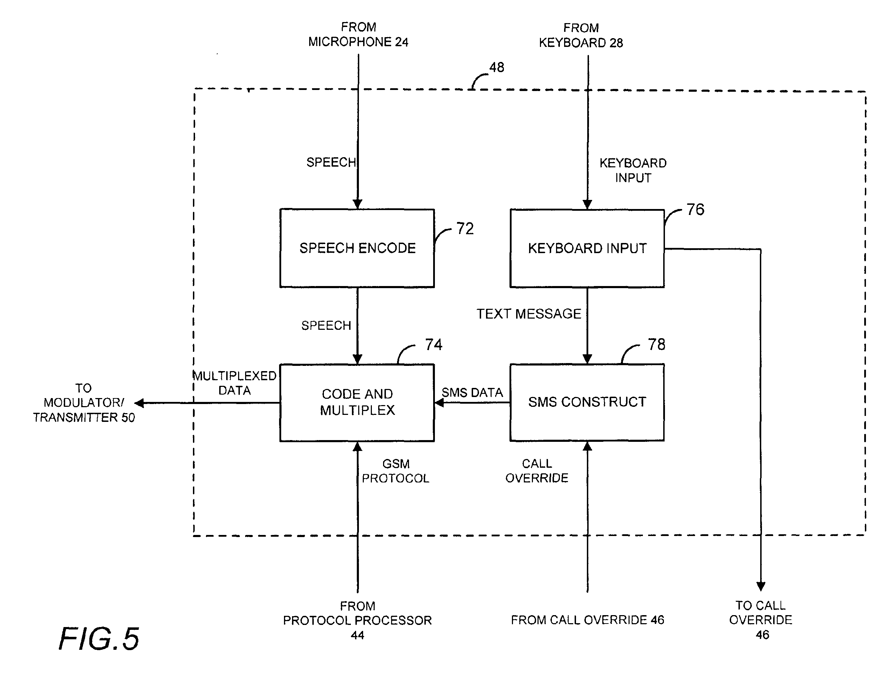

The transmit processing module 48 comprises a number of controller modules, namely a speech encode module 72, a code and multiplex module 74, a keyboard module 76 and an SMS construct module 78, as schematically illustrated in Figure 5. In operation, the speech encode module 72 receives and encodes speech data input from the microphone 24 and forwards the data to the code and multiplex module 74. The keyboard input module 76 receives keyboard input data input by the user of the mobile telephone 2, determines what type the data is, and routes it accordingly. For example, call override instructions are forwarded to the call override module 46 and text messages for transmission are forwarded to the SMS construct module 78.

The SMS construct module 78 converts the different data to be transmitted under the SMS facility into the required format (see later for further details of the SMS format), and forwards the duly constructed SMS data to the code and multiplex module 74.

The code and multiplex module 74 combines the GSM protocol data and any speech data and SMS data to be transmitted, in accordance with the GSM specification, and forwards the resulting transmit data to the modulator and transmitter 50 for transmission from the mobile telephone 2,4.

As will be appreciated by the skilled practitioner, the above-described controller modules of the transmit processing module 48 are conventional features of GSM-compliant mobile telephones, except for the feature whereby the keyboard input interpret and route module 76 is able to recognise and route call override instructions of the present embodiment.

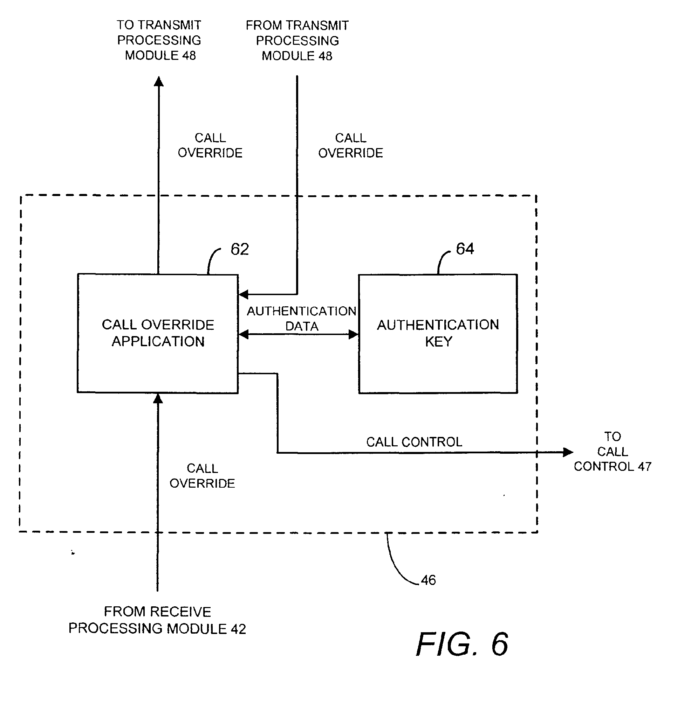

The call override module 46 comprises a call override application 62 and an authentication key 64, as schematically illustrated in Figure 6. Operational steps carried out by the call override module 46 will be described in more detail below with reference to Figures 8 to 13.

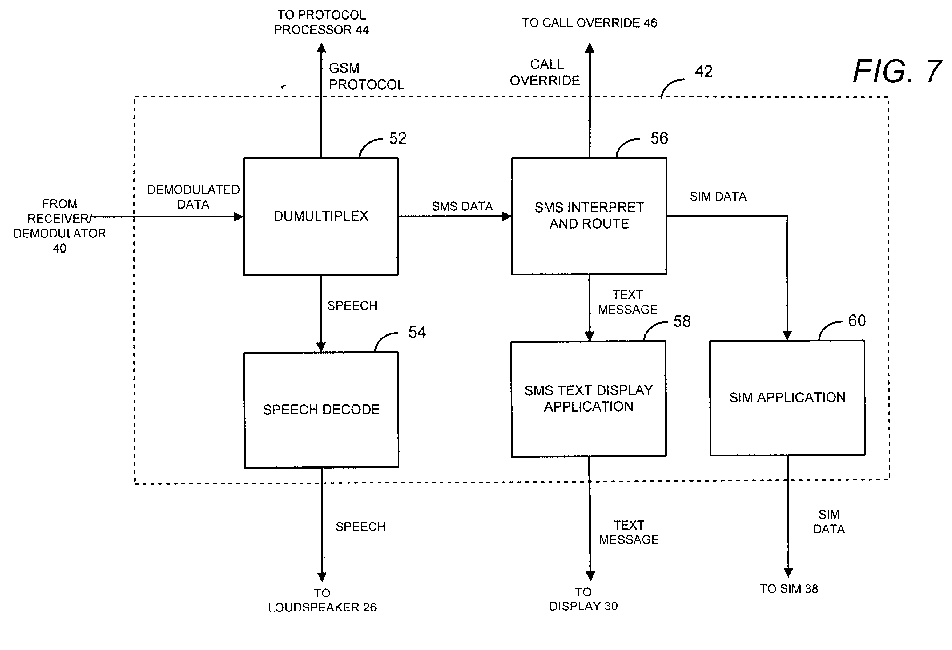

The receive processing module 42 comprises a number of controller modules, namely a demultiplex module 52, a speech decode module 54, an SMS interpret and route module 56, an SMS text display application 58 and a SIM application 60, as schematically illustrated in Figure 7.

In operation, the decode and demultiplex module 52 receives the demodulated data from the receiver and demodulator module 40, decodes and demultiplexes this data, and extracts GSM protocol data, speech data and SMS data. The demultiplex module 52 forwards the different types of extracted data to other modules as follows: the GSM protocol data to the GSM protocol processing module 44, the speech data to the speech decode module 54, and the SMS data to the SMS interpret and route module 56. The GSM protocol processing module 44 processes the GSM protocol data in conventional fashion. The speech decode module 54 decodes the speech data and forwards the decoded speech data to the loudspeaker 26 where it is output in audio form for the user of the mobile telephone 2,4 to hear.

In operation, the SMS interpret and route module 56 determines what type of SMS data it is receiving, i.e. whether the data is a text message, SIM data or call override instruction, as will be described in more detail below.

The SMS interpret and route module 56 forwards any text message to the SMS text display application module 58, which processes the data to provide an appropriate text message output suitable for driving the display 30.

The SMS interpret and route module 56 forwards any SIM data to the SIM application 60, which processes the data for downloading to the SIM 38. The data may, for example, constitute receipt of subscriber payment credits for "pay before use" service.

The SMS interpret and route module 56 forwards any call override instruction to the call override and control module 46.

As will be appreciated by the skilled practitioner, the above-described controller modules of the receive processing module 42 are conventional features of GSM-compliant mobile telephones, except for the feature whereby the SMS interpret and route module 56 is able to recognise and route call override instructions of the present embodiment.

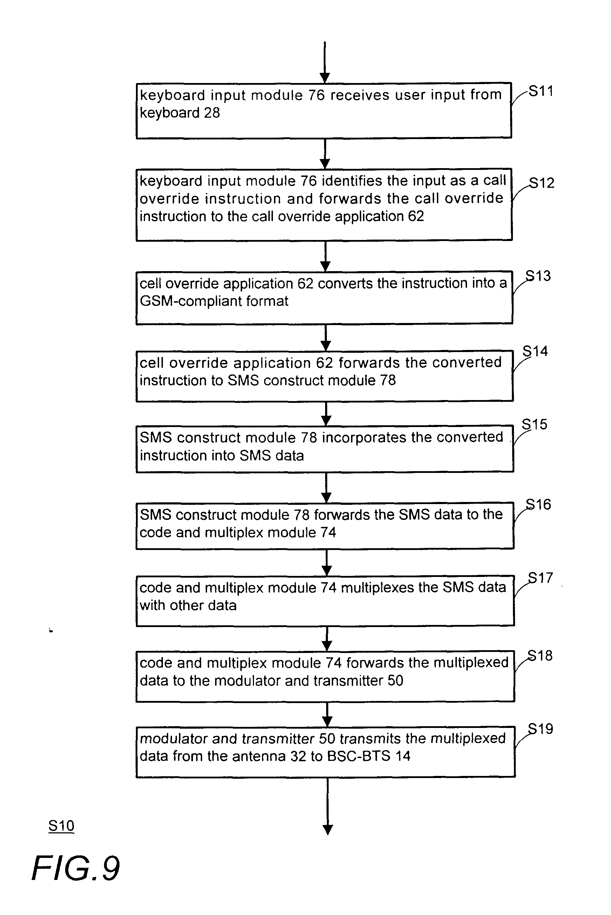

In the present embodiment, each mobile telephone 2 and 4 can be used to transmit an SMS message comprising a call override instruction for overriding a call in progress by another mobile telephone, and conversely can receive an SMS message comprising a call override instruction issued by another mobile telephone and process that call override instruction so as to have its on-going call overridden. These processes will be described in detail below with reference to Figs. 8 and 9. However, it is convenient to first describe the form of the SMS messages employed to convey the call override instructions according to the present embodiment.

The protocols for the SMS facility are defined in section 03.40 of the GSM specification, which comprises a specification of the form for messages sent from a mobile telephone 2,4 to the SC 17, and a specification for messages sent from the SC 17, to a mobile telephone 2,4.

Each of the above types of message comprise protocol-type data comprising signalling and protocol indications, and a main user-data part comprising the basic information content being conveyed by the message. The protocol-type part of the data also includes an indication of what type of information is contained in the user-data part. The protocol-type data is formed of the following elements, which are all defined in section 03.40 of the GSM specification ("TP" signifies transport protocol):

**Table 1**

| | |
|---|---|
| TP-Message-Type-Indicator | (TP-MTI) |
| TP-Reject-Duplicates | (TP-RD) |
| TP-Validity-Period-Format | (TP-VPF) |
| TP-Reply-Path | (TP-RP) |
| TP-User-Data-Header-Indicator | (TP-UDHI) |
| TP-Status-Report-Request | (TP-SRR) |
| TP-Message-Reference | (TP-MR) |
| TP-Destination-Address | (TP-DA) |
| TP-Protocol-Identifier | (TP-PID) |
| TP-Data-Coding-Scheme | (TP-DCS) |
| TP-Validity-Period | (TP-VP) |
| TP-User-Data-Length | (TP-UDL) |

The user-data part is in the form of the following element:

| | |
|---|---|
| TP-User-Data | (TP-UD) |

In the case of messages sent from an SC to a mobile telephone, the overall data is again comprised of protocol-type data and the main user data. The elements forming the header type data in this case, again as defined in section 03.40 of the GSM specification, are as follows:

**Table 2**

| | |
|---|---|
| TP-Message-Type-Indicator | (TP-MTI) |
| TP-More-Messages-to-Send | (TP-MMS) |
| TP-Reply-Path | (TP-RP) |
| TP-User-Data-Header-Indicator | (TP-UDHI) |
| TP-Status-Report-Indication | (TP-SRI) |
| TP-Originating-Address | (TP-OA) |
| TP-Protocol-Identifier | (TP-PID) |
| TP-Data-Coding-Scheme | (TP-DCS) |
| TP-Service-Centre-Time-Stamp | (TP-SCTS) |
| TP-User-Data-Length | (TP-UDL) |

The user-data part is again in the form of the following element:

| | |
|---|---|
| TP-User-Data | (TP-UD) |

In the present embodiment, the above described elements, for both directions of message, are employed in conventional GSM fashion.

In the present embodiment, the user-data field (TP-User-Data) is employed to carry the override instruction. As also defined in section 03.40 of the GSM specification, the user-data field itself may also comprise a header in addition to the main information content. The presence of a header in the user data is signified in the protocol data by setting the TT-User-Data-Head-Indicator equal to 1.

The header contains the following data (where an octet is eight bits of data):

**Table 3**

| FIELD | LENGTH |
|---|---|
| Length of User Data Header | 1 octet |
| Information-Element-Identifier "A" | 1 octet |
| Length of Information-Element "A" | 1 octet |
| Information-Element "A" Data | 1 to "n" octets |
| Information-Element-Identifier "B" | 1 octet |
| Length of Information-Element "B" | 1 octet |
| Information-Element "B" Data | 1 to "n" octets |
| Information-Element-Identifier "n" | 1 octet |
| Length of Information-Element "n" | 1 octet |
| Information-Element "n" Data | 1 to "n" octets |

The Information Element identifier octet is coded in accordance with 03.40. The permissible values are shown in the following table. In this embodiment the value '05' is used to indicate that the SMS is destined for the call override application 62.

**Table 4**

| VALUE (hex) | MEANING |
|---|---|
| 00 | Concatenated short messages, 8-bit reference number |
| 01 | Special SMS Message Indication |
| 02 | Reserved |
| 03 | Value not used to avoid misinterpretation as <LF> character |
| 04 | Application port addressing scheme, 8 bit address |
| 05 | Application port addressing scheme, 16 bit address |
| 06 | SMSC Control Parameters |
| 07 | UDH Source Indicator |
| 08 | Concatenated short message, 16-bit reference number |
| 09 | Wireless Control Message Protocol |
| 0A-6F | Reserved for future use |
| 70-7F | SIM Toolkit Security Headers |
| 80-9F | SME to SME specific use |
| AO-BF | Reserved for future use |
| CO-DF | SC specific use |
| EO-FF | Reserved for future use |

In this embodiment the call override application 62 is identified by a unique application number. The first 4 octets of the Information-Element Data octets identify the application, as specified in section 03.40 of the GSM specification, along the following lines:-

The application entity is uniquely identified by the pair of TP-Destination-Address and TP-Originating-Address and the port address. The port addressing is transparent to the transport, and also useful in Status Reports. The total length of the Information-Element is 4 octets.
octet 1,2: Destination port
These octets contain a number indicating the receiving port, i.e. application, in the receiving device
octet 3,4: Originator port
These octets contain a number indicating the sending port, i.e. application, in the sending device.

The port range is up to 65535 using 16 bit addressing space. The integer value of the port number is presented, in accordance with GSM 03.40 subclause 9.1.2.2, as follows:

**Table 5**

| VALUE (port number) | MEANING |
|---|---|
| 0-15999 | As allocated by a relevant authority (called the Internet Assigned Numbers Authority (IANA). |
| 16000-16999 | Available for allocation by applications |
| 17000-65535 | Reserved |
| Note: in this embodiment it is assumed that a unique number has been allocated by IANA to identify the call override application 62. | |

The remainder of the TP-User-Data field, octet 5, is used to indicate the type of information contained in rest of the information element.

In this embodiment the information content of the initial SMS-message is a basic call override instruction instructing the receiving mobile telephone to terminate its present call. This instruction is indicated by using the code 00 for octet 5.

Additionally, in this embodiment further SMS-messages are passed between a mobile telephone which receives a call override instruction and the mobile telephone which sent the call override instruction, in order to carry out an authentication procedure. The authentication procedure employs standard formats and procedures specified in section 03.20 of the GSM specification. This involves the two mobile telephones each having previously been provided with corresponding values of a secret key value, Kₛ, stored in their respective authentication key modules 64. In this embodiment, the secret key is downloaded via the SIM 38 to the authentication key module 64.

The receiving mobile telephone sends an authentication request of a type specified in section 03.20 of the GSM specification, to the mobile telephone which sent the call override instruction, in the form of an SMS-message containing a value "RAND" (as defined in section 03.20 of the GSM specification) in the TP-User-Data field. The presence of the value "RAND" is indicated by using the code 05 for octet 5 of the TP-User-Data field in the SMS-message otherwise constructed as per the original SMS-message containing the call override instruction.

The mobile telephone which sent the original call override instruction responds to the authentication request by using the "RAND" value, and its own secret key Kₛ value, to calculate a response parameter "SRES" (as defined in section 03.20 of the GSM specification) and then sending, to the receiving mobile telephone, a further SMS-message, containing the response parameter SRES. The presence of the SRES parameter is indicated by using the code 04 for octet 5 of the TP-User-Data field in the SMS-message otherwise constructed as per the original SMS-message containing the call override instruction.

In the present embodiment, each of the mobile telephones 2 and 4 are able to both transmit and receive SMS messages containing call override instructions. The process steps carried out by the mobile telephones 2 and 4 and the cellular communications system 1 when processing such call override instructions will now be described for the case when the mobile telephone 2 sends a call override instruction to the mobile telephone 4, first in overview with reference to Figure 8 and then in detail with reference to Figures 9 to 13.

Referring to Figure 8, at step S10, in response to a user input, the mobile telephone 2 prepares a call override instruction and transmits an SMS-message containing the call override instruction, directed to the mobile telephone 4, to the BSC-BTS 14 of the cellular communications system 1 over the radio link 8.

At step S20, the cellular communications system 1 receives (at the BSC-BTS 14) the SMS-message containing the call override instruction and transmits a corresponding SMS-message to the mobile telephone 4 over the radio link 10.

At step S30, the mobile telephone 4 receives the SMS-message, processes the call override instruction and transmits an SMS-message containing an authentication request, directed to the mobile telephone 2, to the BTS-BSC 14 over the radio link 10.

At step S45, the cellular communications system 1 receives (at the BSC-BTS 14) the SMS-message containing the authentication request and transmits a corresponding SMS-message to the mobile telephone 2 over the radio link 8.

At step S50, the mobile telephone 2 receives the SMS-message, processes the authentication request and transmits an SMS-message containing an authentication response, directed to the mobile telephone 4, to the BTS-BSC 14 over the radio link 8.

At step S65, the cellular communications system 1 receives (at the BSC-BTS 14) the SMS-message containing the authentication response and transmits a corresponding SMS-message to the mobile telephone 4 over the radio link 10.

At step S70, the mobile telephone 4 receives the SMS-message, processes the authentication response, then implements the original call override instruction by terminating its current call.

Each of the above steps will now be explained in more detail.

The process steps carried out by the mobile telephone 2 in step S10 are shown in Figure 9. At step S11, the keyboard input module 76 receives a user input from the keyboard 28. The user input selects the call override function and includes the telephone number of the mobile telephone whose current call the user wishes to override (in this embodiment mobile telephone 4). At step S12 the keyboard input module 76 identifies the input as a call override instruction and forwards the call override instruction to the call override application 62 of the call override module 46.

At step S13, the call override application 62 converts the instruction into a GSM-compliant format such that the call override instruction can be inserted into the TP-user-data field of the SMS-message format, as described above. Also, the call override application includes the telephone number of the mobile telephone 2, as this information will later be used by the mobile telephone 4 when replying with an authentication request. At step S14, the call override application forwards this converted instruction to the SMS construct module 78.

At step S15, the SMS construct module 78 incorporates the converted instruction into SMS data comprising an SMS-message in compliance with the GSM specification, by including the protocol-type data listed above in Table 1 and by incorporating the call override instruction itself in the TP-User-Data field. At step S16, the SMS construct module 78 forwards this SMS data to the code and multiplex module 74.

At step S17, the code and multiplex module 74 multiplexes the SMS data with GSM protocol data received from the GSM protocol processing module 44 (and if a speech call is underway at the same time also incorporates any speech data from the speech encode module 72) to form multiplexed data. At step S18, the code and multiplex module 74 forwards the multiplexed data to the modulator and transmitter module 50. At step S19, the modulator and transmitter module 50 transmits the multiplexed data from the antenna 32 to the BSC-BTS 14 over the radio link 8.

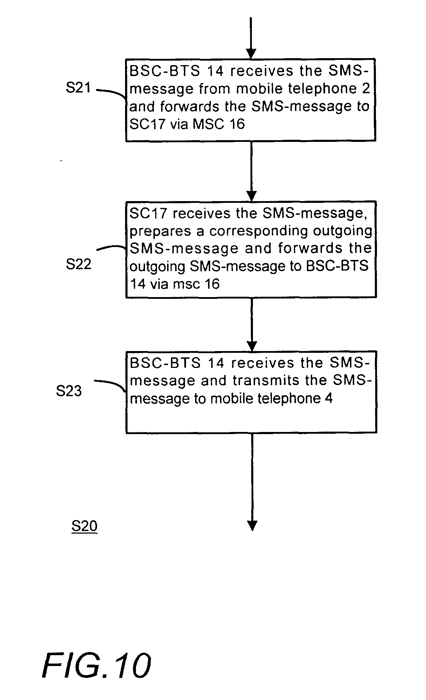

The process steps carried out by the cellular communications system 1 in step S20 are shown in Figure 10. At step S21, the BSC-BTS 14 receives the SMS-message from the mobile telephone 2 and forwards the content of the SMS-message to the SC 17 via the MSC 16.

At step S22, the SC 17 receives the incoming SMS-message, prepares a corresponding outgoing SMS-message (as specified in section 03.40 of the GSM specification) and forwards the outgoing SMS-message to the BSC-BTS 14 via the MSC 16.

At step S23, the BSC-BTS 14 receives this SMS-message and transmits this SMS-message as part of the signal it transmits to the mobile telephone 4 over the radio link 10.

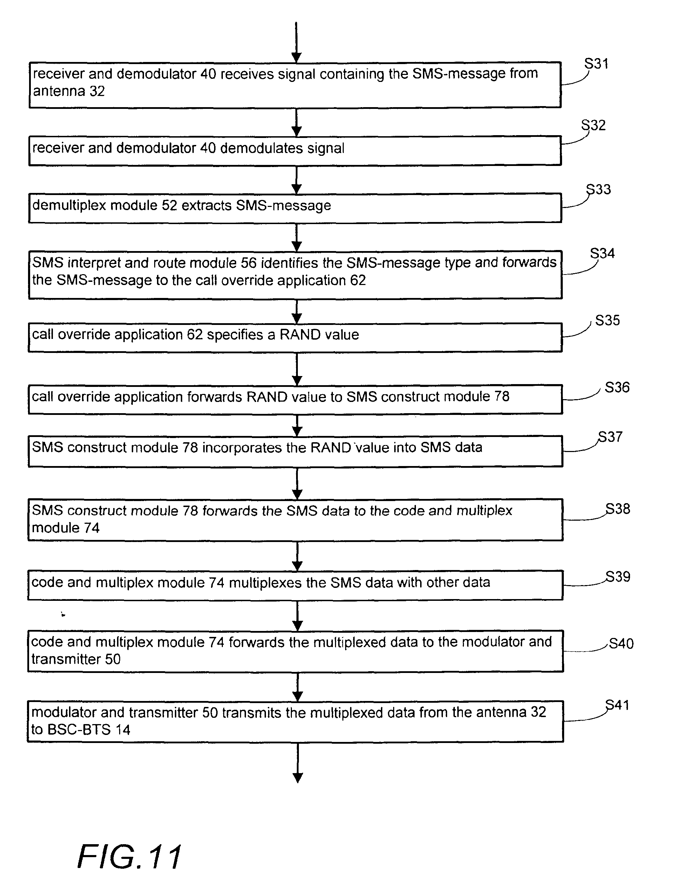

The process steps carried out by the mobile telephone 4 in step S30 are shown in Figure 11. At step S31, the receiver and demodulator module 40 receives the signal containing the SMS-message from the antenna 32. At step S32, the receiver and demodulator 40 demodulates the signal and forwards the demodulated data to the demultiplex module 52.

At step S33, the demultiplex module 52 extracts the SMS-message and forwards the SMS-message to the SMS-interpret and route module 56.

At step S34, the SMS interpret and route module 56 establishes that the SMS-message contains a call override instruction (by reading the code 05 for the Information Element identifier octet of the header of the TP-User Data field as described above) and forwards the SMS-message to the call override application 62.

At step S35, the call override application 62 specifies a "RAND" value to send to the mobile telephone 2 for authentication purposes (as described above), and at step S36 forwards the RAND value to the SMS construct module 78.

At step S37, the SMS construct module 78 incorporates the RAND value into SMS data by including it in the TP-User-Data field of an SMS-message. At step S38, the SMS construct module 78 forwards the SMS data to the code and multiplex module 74.

At step S39, the code and multiplex module 74 multiplexes the SMS data with other data (as described above for step S17 as carried out by the mobile telephone 2). At step S40, the code and multiplex module 74 forwards the multiplexed data to the modulator and transmitter 50.

At step S41, the modulator and transmitter 50 transmits the multiplexed data from the antenna 32 to the BSC-BTS 14 over the radio link 10.

The process steps carried out by the cellular communications system 1 in step S45 correspond directly to the process steps S21, S22 and S23 carried out in step S20 as shown in Figure 10, with the exception that the SMS-message contains the authentication request rather than the call override instruction.

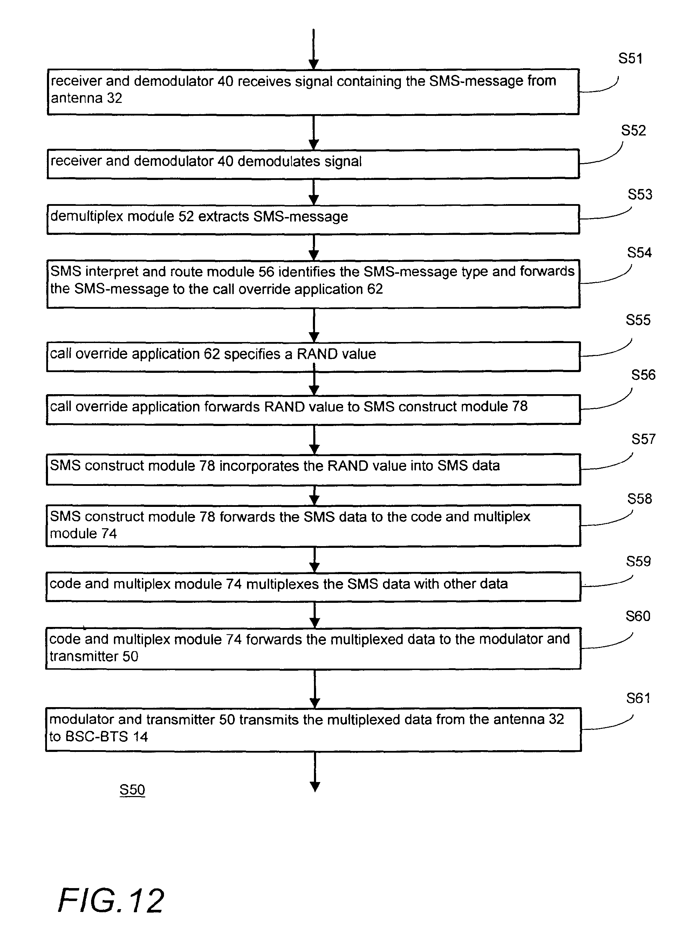

Process steps S51 to S61 carried out by the mobile telephone 2 in step S50 are shown in Figure 12, and correspond directly to the process steps S31 to S41 carried out by the mobile telephone 4 in step S30 and shown in Figure 11, with the following exceptions. At step S55 the call override application determines a response parameter "SRES" by obtaining its stored value of the secret key Ks (as described above) from the authentication key 64, and at steps S56 and S57 this SRES value is forwarded and incorporated (rather than the RAND value).

The process steps carried out by the cellular communications system in step S65 corresponds directly to the process steps S21, S22 and S23 carried out in step 20 and as shown in Figure 10, with the exception that the SMS-message contains the SRES parameter (i.e. authentication response) rather than the call override instruction.

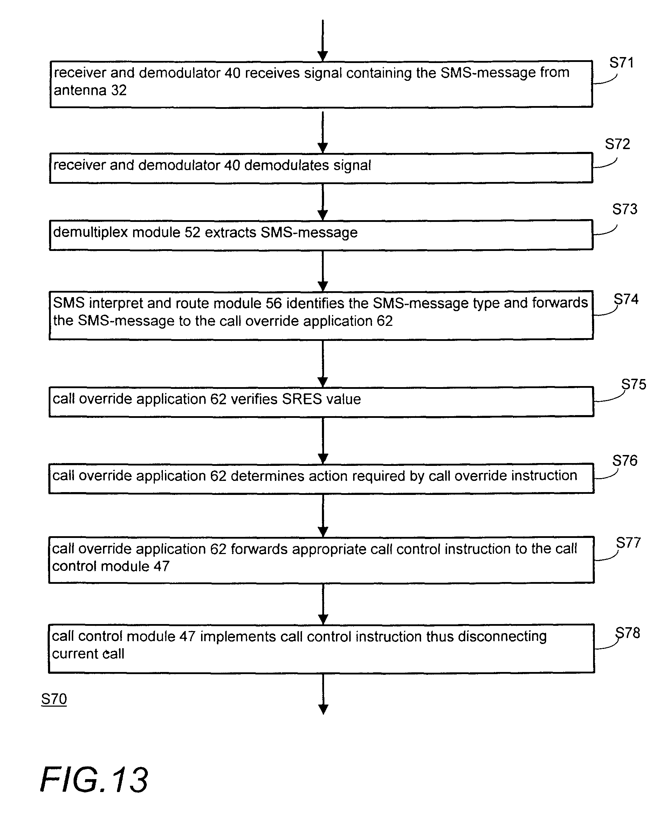

The process steps carried out by the mobile telephone 4 in step S70 are shown in Figure 13. Process steps S71, S72, S73 and S74 correspond directly to the process steps S31, S32, S33 and S34 carried out in step S30 and as shown in Figure 11.

At step S75, the call override application 62 verifies the value of the response parameter SRES by retrieving the stored value of the secret key Ks from the authentication key module 64 and carrying out the conventional authentication process defined in section 03.20 of the GSM specification. At step S76, the call override application 62 analyses the original call override instruction to determine the action specified by the call override instruction. In the present embodiment this is to terminate the current call which the mobile telephone 4 is engaged in. At step S77, the call override application 62 forwards a call control instruction for this purpose to the call control module 47. In this embodiment, the call control module 47 operates according to standard GSM specifications, and hence the call control instruction provided by the call override application is in standard GSM form.

At step S78, the call control module implements the call control instruction specifying disconnection of the current call using the conventional GSM signalling procedures as specified in section 04.08 of the GSM specification. This procedure is well known to a skilled practitioner and comprises the call control module 47 initiating call clearing by sending a "DISCONNECT" message to the BSC-BTS 14, and thereafter the mobile telephone 4 and the BSC-BTS 14 follow the remaining procedures defined in section 04.08 of the GSM specification.

Thus, as a result of the above process steps, the call in which the mobile telephone 4 was engaged has been disconnected, in response to the call override instruction originally sent by the mobile telephone 2. The user of mobile telephone 2 is now able to place a new call to the mobile telephone 4, which will be able to respond to the paging signal thereby produced.

In the above embodiment the mobile telephones 2 and 4 were each only able to specify and react to call override messages in terms of terminating a current call. In other embodiments, the mobile telephones 2 and 4 are able to specify and respond to call override instructions in which more than one ultimate action by the receiving mobile telephone can occur. In one simple example, there are two possible instructions, one being to terminate the present call as in the above embodiment, the other being to put the present call on hold. In this embodiment the user input from the keyboard as received at step S11 will indicate which type of response is being requested by the user of the mobile telephone 2. Octet 5 of the TP-user-data, as described above, is again allocated the code 00 for the instruction to the receiving mobile telephone to terminate its present call, whereas the code 01 is specified for the instruction for the receiving mobile telephone to put its present call on hold. When instructed to put a present call on hold, the call override application 62 of the receiving mobile telephone sends a corresponding call control instruction to the call control module 47, and the call control module 47 implements putting of the mobile telephone's call onto hold using conventional signalling procedures specified in section 04.08 of the GSM specification.

In a more complicated example, there is a third option, indicated by a code 02 placed in octet 5 of the TP-user-data field, which, in terms of the exemplary procedure described in embodiment 1, is for the mobile telephone 4 to terminate its present call and thereafter initiate a new call automatically to the telephone number of the mobile telephone 2 (which sent the call override instruction). The mobile telephone 4 has already learnt the telephone number of mobile telephone 2 because the number was enclosed in the call override instruction (as described earlier) so that the return SMS message required for authentication could be sent. If, however, such a return telephone number was not already required for authentication purposes (as is the case for certain embodiments to be described later below), then the option to initiate a new call to the telephone number of the mobile telephone from which the call override instruction has been received would necessitate the telephone number of the mobile telephone 2 being included in the originally sent call override instruction.

In yet a further embodiment, the call override instruction may specify that the mobile telephone 4 puts its present call on hold, then initiates a return call to the telephone number of the mobile telephone 2. This return call is established in accordance with standard procedures specified in section 04.08 of the GSM specification. It is also possible for the user of the mobile telephone 4 to then set up a three-way call by bringing back the external call that has been put on hold, using conventional GSM procedures.

In the above embodiments a two-way authentication procedure was carried out to validate that the sending mobile telephone was indeed that mobile telephone which was authorised to override a call of the receiving mobile telephone. Such a two-way authentication procedure is particularly advantageous in preventing fraudulent overriding of a call in public access communications systems. However, in other embodiments, particularly in closed networks, the authentication procedure is primarily employed to avoid mistaken rather than fraudulent overriding of a call, and hence one possibility is to use a simpler one-way authentication procedure. In this procedure, the sending mobile telephone simply encloses authentication data as part of its call override instruction.

In further embodiments, call override instructions may be accepted from any mobile station within the communication system, in which case authentication may be omitted.

In the above embodiments, the mobile telephone 2 was only authorised to send call override instructions to the mobile telephone 4, and similarly the mobile telephone 4 was only authorised to receive call override instructions from the particular mobile telephone 2. In other embodiments, one mobile telephone may be authorised to send call override instructions to a plurality of mobile telephones. Similarly, one mobile telephone may be set up to accept call override instructions from a plurality of mobile telephones. Furthermore, a plurality of mobile telephones may be authorised to send call override instructions to a plurality of recipient mobile telephones. In any of these cases, where necessary, a mobile telephone will contain a corresponding plurality of secret keys in the authentication key module 64.

In the above embodiments, the secret key is originally entered in the authentication key module 64 by being downloaded via the SIM 38. An advantage of the authentication data being provided via the SIM is that authentication data can be updated for security purposes, changes of relationships between the users of the mobile telephones, and so on. One disadvantage, however, is that the involvement or cooperation of the operator or other commercial controller of the cellular communications system or network (who provides the SIM 38), is required. As such, in the above embodiments it is not possible to provide the above described call override capabilities merely by adapting the mobile telephones. However, in the case of embodiments employing other authentication procedures, or embodiments where no authentication procedures are involved, or embodiments where the authentication process is incorporated without use of the SIM, (e.g. by embedding authentication keys or other data into the circuitry of the mobile telephone itself), then such cooperation or involvement of the cellular communication system or network can be avoided.

In the above embodiments, the receiving mobile telephone always respond to the call override instruction by accepting the requirement to interrupt its call, providing any authentication data and so on was satisfactory. In other embodiments, the receiving mobile telephone need not always respond to the call override instruction or request. Whether the receiving mobile telephone responds to the call override instruction may be determined automatically in terms of some predetermined criteria or according to a response of the user of the receiving mobile telephone.

In the case of automatic determination, whether the call override instruction is followed may depend on some characteristic of the current call. For example, the call override application 62 may be programmed such that calls to specific numbers are not interrupted, (e.g. calls to emergency services or calls to particular people, such as people in an organisation's hierarchy who are higher in that hierarchy than the sender of the call override instruction). In other embodiments, any other suitable criteria can be employed, e.g. it can be determined how long the current call has been in process, and if this is less than a predetermined threshold, then the call is not interrupted. Another example may be to determine how much subscriber credit is remaining on the SIM of the receiving mobile telephone.

In other embodiments, the receiving mobile telephone can be interrogated by the call override to determine information such as how long the current call has been taking place, how much subscriber credit remains on the SIM, etc. and this information returned to the sending mobile telephone such that the user of the sending mobile telephone can decide whether to continue with the call override instruction process.

In embodiments where the user of the receiving mobile telephone determines whether a received call override instruction is to be accepted, this facility can be provided by, for example, the call override application sending a text prompt to the display instructing the user of the receiving mobile telephone to allow or overrule the call override instruction.

Each of the above possibilities for determining whether a call override instruction should be accepted may be provided as options for any particular mobile telephone, such options being selectable by the user of the mobile telephone by input via the keyboard, in conventional fashion.

The above embodiments relate to mobile telephones operating in a GSM cellular communications system. It is to be appreciated that the present invention is not limited to such a system, and can be applied to other TDMA cellular communications systems, code division multiple access (CDMA) cellular communications systems, and combined TDMA/CDMA cellular communications systems. Indeed, the present invention is not limited to cellular communications systems, and instead can be applied to any communication system in which user stations can receive free-format messages, which can contain different types of data, in parallel to a separate traffic mode of operation, whether the traffic be speech or other data or combination speech and other data, and wherein the primary traffic channel operates fundamentally on a call basis which needs to be interrupted for a third party to conduct the same traffic mode with the receiving user station instead of the call that it is currently engaged in.

In the above embodiments, the call override instruction was sent from one mobile telephone and received by another mobile telephone, these two mobile telephones being corresponding entities in the same cell of a particular cellular communications system. In other embodiments the two mobile telephones can be in different cells (i.e. served by different BTSs). In other embodiments, one mobile telephone may be in one cellular communications system (or network) and the other mobile telephone may be in another cellular communication system (or network). The distinction between one system or network and another system or network can be due to geographical differences, the use of separate infrastructure in a common or overlapping geographical area, or when some infrastructure is shared can arise due to separate control being exerted by separate networks on some commercial or other organisational basis.

Furthermore, the call override instruction may be issued from or originate from apparatus other than a mobile telephone. For example, the call override instruction may be initiated at an SMS service centre (such as SC 17) in response to any suitable input, e.g. from a telephone call from a normal landline telephone connected to the PSTN, or even from a written, e-mailed or otherwise formulated request received by the service centre which then issues the appropriate outgoing SMS-message.

In the above embodiments, the various processes related to the call override instructions were carried out by the call override application 62, forming part of the call override module 46, for both sending and receiving call override instructions. In other embodiments, separate call override applications and/or call override modules may be provided for the different purposes of sending a call override instruction and responding to a call override instruction. Certain mobile telephones may be provided with only the means for sending call override instructions, and other mobile telephones may be provided with only the means for receiving and responding to call override instructions.

In the above embodiments, the mobile telephone implemented a received, processed and duly authorised call control instruction by employing its call override application 62 to send a standard GSM-specified call control instruction to a standard GSM-specified call control module 47. In other embodiments, a separate call control module or modules can be incorporated, in addition to a GSM-specified call control module, and used purely for implementing call override instructions. In these embodiments, responses other than those specified as standard in the GSM specifications can be implemented in response to received call override instructions.

In each of the above embodiments, the controller 34 is configured with program instructions and/or data. Such program instructions and/or data may be pre-stored in a storage medium such as a PROM, for example forming part of the memory 36.

The above embodiments have all been described in relation to the specific mobile telephones 2 and 4 as illustrated in Figures 1 to 3. It is to be appreciated that other forms of mobile telephone or similar apparatus can be employed, and that moreover none of the specific components shown as part of the mobile telephones 2 and 4 in Figures 2 and 3 are essential to the present invention. Similarly, part or all of the procedures of the present invention can be carried out by components other than a controller, e.g. dedicated circuitry can be used instead.

## Claims

1. A telecommunications apparatus operable to communicate with a remote telecommunications apparatus via a communications network, the communications network supporting both traffic data associated with a telephone call and message data,
the telecommunications apparatus comprising means for constructing message data for transmission to a remote telecommunications apparatus, **characterised in that** the constructing means is operable to include in the message data an instruction implementable by the remote telecommunications apparatus to override a telephone call in which the remote telecommunications apparatus is participating.

2. A telecommunications apparatus according to claim 1, wherein the constructing means is operable to include in the message data an override instruction implementable by the remote telecommunications apparatus to terminate a telephone call.

3. A telecommunications apparatus according to claim 2, wherein the constructing means is operable to include in the message data an override instruction implementable by the remote telecommunications apparatus to initiate a new telephone call to said telecommunications apparatus.

4. A telecommunications apparatus according to claim 1, wherein the constructing means is operable to include in the message data an override instruction implementable by the remote telecommunications apparatus to put said telephone call on hold.

5. A telecommunications apparatus according to claim 4, wherein the constructing means is operable to include in the message data an override instruction implementable by the remote telecommunications apparatus to initiate a new telephone call to said telecommunications apparatus.

6. A telecommunications apparatus according to claim 5, wherein the constructing means is operable to include in the message data an override instruction implementable by the remote telecommunications apparatus to bring both parties of said telephone call put on hold into the new telephone call.

7. A telecommunications apparatus according to any preceding claim, further comprising means for transmitting authentication data to the remote telecommunications apparatus via the communications network.

8. A telecommunications apparatus according to any of claims 1 to 7, wherein the telecommunications apparatus forms part of a switching centre of the communications network, and said constructing means is operable to construct the message data in response to an initiation signal received from a user terminal coupled to the communications network.

9. A telecommunications apparatus according to any of claims 1 to 7, wherein the telecommunications apparatus forms part of a user terminal which is operable to communicate via the communications network.

10. A telecommunications apparatus operable to communicate with a remote telecommunications apparatus via a communications network, the communications network supporting both traffic data associated with a telephone call and message data,
the telecommunications apparatus comprising means for receiving message data from a remote telecommunications apparatus during a telephone call,
**characterised in that** the message data includes an instruction to override the telephone call, and the telecommunications apparatus further comprises means for implementing said override instruction.

11. A telecommunications apparatus according to claim 10, wherein the implementing means is operable to terminate a telephone call in response to a received override instruction.

12. A telecommunications apparatus according to claim 11, wherein the implementing means is operable to initiate a new telephone call to the remote telecommunications apparatus in response to the override instruction.

13. A telecommunications apparatus according to claim 10, wherein the implementing means is operable to put said telephone call on hold in response to a received override instruction.

14. A telecommunications apparatus according to claim 13, wherein the implementing means is operable to initiate a new telephone call to said remote telecommunications apparatus in response to said override instruction.

15. A telecommunications apparatus according to claim 14, wherein the implementing means is operable to bring the other party of said telephone call into the new telephone call.

16. A telecommunications apparatus according to any of claims 10 to 15, further comprising means for receiving and verifying authentication data authenticating the source of the message data.

17. A telecommunications apparatus according to any of claims 10 to 16, further comprising means for determining whether or not to cause the override instruction to be implemented.

18. A telecommunications apparatus according to claim 17, wherein the determining means is operable to determine whether or not to cause the override instruction to be implemented in dependence upon an identity or telephone number associated with the other party of said telephone call.

19. A telecommunications apparatus according to claim 17, wherein the determining means is operable to determine whether or not to cause the override instruction to be implemented in dependence upon a duration of said telephone call.

20. A telecommunications apparatus according to claim 17, wherein the determining means is operable to determine whether or not to cause the override instruction to be implemented dependent upon a level of subscriber credit associated with the telecommunications apparatus.

21. A telecommunications apparatus according to claim 17, further comprising a user interface for receiving a user input indicating whether or not to cause the override instruction to be implemented, wherein said determining means is operable to determine whether or not to cause the instruction to be implemented in accordance with a received user input.

22. A telecommunications apparatus according to any of claims 10 to 21, further comprising a telecommunications apparatus according to any of claims 1 to 10.

23. A telecommunications apparatus according to any preceding claim, wherein the telecommunications is adapted for use in a cellular communications system.

24. An apparatus according to claim 23, wherein the communications system is a GSM cellular communications system, and wherein the message data is conveyed using a Short Message Service, for example as defined in the GSM specification.

25. A telecommunications apparatus operable to communicate with other telecommunications apparatuses over a communications network supporting both traffic data associated with a telephone call and message data, the telecommunications apparatus comprising:
means for receiving, from a user, instructions for affecting an on-going telephone call being conducted utilising another telecommunications apparatus; and
message generating means for generating and transmitting to said other telecommunications apparatus a message incorporating control instructions determined by the received user instructions to cause said other telecommunications apparatus to act to affect the on-going telephone call in accordance with the received user instructions.

26. A telecommunications apparatus operable to communicate with other telecommunications apparatuses over a communications network supporting both traffic data associated with a telephone call and message data, the telecommunications apparatus comprising:
means for receiving, during a telephone call, a message from another telecommunications apparatus including control instructions for causing the telecommunications apparatus to affect the on-going telephone call; and
means for causing the telephone call to be affected in accordance with the received control instructions.

27. A method of generating message data for communication to a remote telecommunications apparatus via a communications network supporting both traffic data associated with a telephone call and message data,
the method comprising:
constructing message data including an instruction implementable by the remote telecommunications apparatus to override a telephone call in which the remote telecommunications apparatus is participating.

28. A method of operation of a telecommunications apparatus operable to communicate with a remote telecommunications apparatus via a communications network, the communications network supporting both traffic data associated with a telephone call and message data,
the method comprising:
receiving message data from a remote telecommunications apparatus during a telephone call, the message data including an instruction to override the telephone call; and
implementing said override instruction.

29. A storage device storing instructions including instructions for causing a telecommunications apparatus to perform a method as claimed in claim 27 or 28.
